# EUROPEAN PATENT SPECIFICATION

(11) **EP 3 938 193 B1**
(45) Date of publication and mention of the grant of the patent: **26.11.2025**
(21) Application number: 20709243.8
(22) Date of filing: 13.03.2020
(51) Int. Cl.: B29D 35/00, B29C 45/26, B29C 45/14, B29C 45/56, B29L 31/50

(54) **FOOTWEAR INJECTION MOULD**
SCHUHSPRITZGUSSFORM
MOULE D'INJECTION DE CHAUSSURE

(30) Priority: 13.03.2019 EP 19162519
(43) Date of publication of application: 19.01.2022
(73) Proprietor: Ecco Sko A/S, 6261 Bredebro (DK)
(72) Inventor: MORTENSEN, Jens, Sonne, 6261 Bredebro (DK); HANSEN, Jakob, Møller, 6261 Bredebro (DK)
(74) Representative: Patentgruppen A/S
(86) International application number: PCT/EP2020/056877
(87) International publication number: WO 2020/182986

(56) References cited:
- WO-A1-2015/033272
- AU-A1- 2016 204 359
- US-A1- 2015 298 413
- US-A1- 2017 239 903

## Description

### TECHNICAL FIELD

A footwear injection mould, the footwear injection mould comprising a primary injection mould and a secondary injection mould.

### BACKGROUND

There exist a number of different ways of producing footwear, where a sole is attached to an upper, to produce a useable article of footwear. There are at least two way of attaching a sole assembly to an upper, where the traditional way is to cement a sole to the upper by the use of adhesives, while another way of doing this is via direct injection moulding, where the sole is directly moulded to the upper.

In direct injection moulding, there is a traditional way of producing shoes, where the shoe injection mould is manufactured from a block of metal, e.g. aluminium, where the mould may be cast or the mould may be CNC cut to define the mould cavity. These methods of preparing moulds are relatively time consuming and expensive, as the equipment needed to produce these kinds of moulds are relatively expensive. Furthermore, when a footwear manufacturer produces a new line of shoes, the shoe comes in a plurality of sizes, and needs to be produced in a right and a left version. This means that for one type of shoes, a large number of moulds have to be manufactured, as each size and orientation of shoe needs a separate mould.

The high cost of the moulds means that it may be relatively expensive to produce moulds for shoes, which means that a vast amount of shoes have to be produced and sold in order to justify the manufacturing of the moulds. This also means that if a limited range, a limited edition or a prototype line of a shoe is to be manufactured, where only a fraction of the number will be produced, the cost of the shoe has to relatively high to pay for the production of the mould, in addition to the remaining cost of the shoe.

One method of providing lower cost moulds has been to 3D print a mould, where the mould as a whole is 3D printed, so that the 3D printed mould can withstand the wear and tear repeated moulding of a plurality of shoes, and have a volume so that the structural integrity of the mould is enough to withstand the expanding injected material without warping or deforming during use. However, as current 3D printed material is often made of a plastics or polymeric material, the thermal conductivity of the 3D printed mould may be relatively low, which means that it is difficult and time consuming to heat the large mould up to a temperature where the curing of the injected material is done in a manner where the finish of the moulded product is sufficient. It has also been shown that it is difficult to heat a one piece mould up the necessary temperature to obtain the required temperature.

AU 2016 204 359 discloses a method and an assembly for injection moulding of footwear soles, where the mould comprises different injection moulded sections of the midsole, allowing the midsole to have different shock absoption, cushioning and/or structural performance. However, this method shows different moulding sections, removeable from a footwear mould, that may be utilized to block a part of the footwear mould, allowing a second injection to fill up the blocked part, and does therefore not provide a reduction in manufacturing cost.

Thus, there is a need to provide a footwear injection mould, where the manufacturing cost of the mould may be reduced relative to the traditional footwear moulds, and the production quality of the article of footwear lives up to the standard of the manufacturer.

### GENERAL DESCRIPTION

In accordance with the present description, there is provided a footwear injection mould as specified in claim 1.

Within the understanding of the present disclosure the terms "distal" and "proximal" relate to a positioning relative to a central point inside the injection chamber of the footwear injection mould or a central point of the resulting injected part, where the term proximal may mean facing the to the injection chamber or injected part, where the term distal may mean facing away from the injection chamber. Thus, the term is seen as relative to a central point of the injection chamber and/or the part which is moulded inside the injection chamber.

The provision of a footwear injection mould having a primary injection mould and a secondary injection mould allows the mould to be more adjustable than standard footwear injection moulds that comprise only a single mould. The present footwear injection mould may be provided with a single primary injection mould, but may be provided with a plurality of interchangeable secondary injection moulds, where the secondary injection mould defines the cavity to be injected while the primary injection mould provides the secondary injection mould with a stable basis to which the secondary injection mould can be coupled to prior to injection moulding.

Traditional shoe injection moulds are cast or milled out of a block of metal, such as aluminium, where a single mould comprises an inner surface which defines the surface of the element to be moulded, and an outer surface comprises a coupling assembly which is configured to attach the primary injection mould to an injection moulding apparatus. Such a mould is relatively expensive to produce, as the machinery required to produce such a mould is very expensive, and a single mould can only be utilized for a single size of shoe. Thus, when a certain type of shoe is to be produced in a number of different sizes, the moulds have to be made in each size. Thus, in order to be cost effective, the shoe production must be made in thousands of pairs of shoes in order for the cost of the moulds to be recovered.

However, with the current disclosure, the primary injection mould may be produced in traditional ways, but where the at least part of the cavity for the injection moulding may be provided with a secondary injection mould, where the secondary injection mould can be mounted on the primary injection mould when an article of footwear is to be produced. The primary injection mould may therefore be configured to be a holder for a secondary injection mould, where the primary injection mould provides the structural strength required to inject material, and where the secondary injection mould is supported by the primary injection mould in such a way that the structural strength of the primary injection mould may be transferred in part to the secondary injection mould. This means that the strength, durability and structural integrity requirements of the secondary injection mould is not as high as for the primary injection mould. This therefore means that the secondary injection mould may be formed out of a material that has less durability than the primary injection mould, as the secondary injection mould may be replaced when it has served its purpose.

This means that if a set of moulds is to be produced for a certain type of shoes, the set may comprise one primary injection mould that may be mounted in the injection moulding apparatus, but where a plurality of secondary injection moulds may be provided for different sizes of shoes. The secondary injection mould may be constructed out of a material that may be relatively easy to form, and as the structural integrity of the footwear injection mould is provided by the primary injection mould, the secondary injection mould may be constructed out of significantly less material than the primary injection mould, and out of a material that has less durability. The structural integrity requirements of the secondary injection mould may be significantly less than the structural integrity requirements of the primary injection mould, as the primary injection mould supports the secondary injection mould during use. This therefore means that the structural integrity requirements of the secondary injection mould can be fulfilled by the coupling between the primary injection mould and the secondary injection mould. Thus, the primary injection mould may be constructed of a material that has a high manufacturing cost, while the secondary injection mould may be constructed of a material that has the necessary rigidity to define the mould cavity, but with a cheaper manufacturing cost.

Thus, the secondary injection mould can be easily exchanged from the primary injection mould, and replaced by a second secondary injection mould, that may have the same or a similar injection moulding cavity than the first secondary injection mould, or may have a different injection moulding cavity than the first secondary injection mould. This means that the disclosed footwear injection mould has a much higher flexibility than traditional footwear injection moulds. Thus, the disclosed footwear injection mould may be used to form multiple sizes of shoes as well as multiple types of shoes, without changing the primary injection mould, but only changing the secondary injection mould for a different style of size.

The primary injection mould can provide the stability for the secondary injection mould, which means that the secondary injection mould can be smaller and more delicate than the primary injection mould, where during use the primary injection mould supports the secondary injection mould and transfers structural stability to the secondary injection mould. The coupling between the primary injection mould and the secondary injection mould may provide a releasable coupling, where the secondary injection mould may be removed from the primary injection mould on a selective basis.

An injection moulding set may comprise a first primary injection mould and two or more secondary injection moulds that are adapted to couple to the primary injection mould. The primary injection mould and the secondary injection mould may in accordance with the present disclosure. The use of a primary injection mould and a secondary injection mould means that one primary injection mould may be utilized with a plurality of secondary injection moulds. This means that when a production line of a certain type of shoe is performed, one primary injection mould may used together with more than one secondary injection moulds, where each of the secondary injection mould may define at least a part of a mould cavity having a predefined shoe size. Thus, a first secondary injection mould may a have a first shoe size, while a second secondary injection mould may have a second shoe size, where the second shoe size is different from the first shoe size.

The primary injection mould may be formed so that the primary injection mould has a first volume, while the secondary injection mould may have a second volume, where the first volume is larger than the second volume. The difference in volume may affect the production time and/or the material cost of the primary injection mould and the secondary injection mould, where a smaller volume may entail that the secondary injection mould may be produced quicker than the first mould, should the moulds be produced in a similar manner. Furthermore, the difference in volume may also mean that the secondary injection mould may have a material cost that is smaller than the primary injection mould, which means that the replacement of a secondary injection mould when it is e.g. worn out, may be less than in traditional moulding processes and systems.

The coupling between the primary injection mould and the secondary injection mould may be in such a manner that the primary injection mould supports the secondary injection mould from at least a first direction, where the direction may be in a transverse direction (axis) relative to the injection moulding cavity. This means that when the injected material expands inside the closed moulding cavity, the primary injection mould maintains the position of the secondary injection mould when the force of the expanding material pushes onto the secondary injection mould. Thus, the primary injection mould may ensure that the secondary injection mould does not move in a transverse direction as the primary injection mould supports the secondary injection mould in the transverse direction. By ensuring that the primary injection mould supports the secondary injection mould, the secondary injection mould may have a first rigidity that is less than a second rigidity of the primary injection mould, as the primary injection mould provides the support to the secondary injection mould. The coupling of the secondary injection mould to the primary injection mould ensures that the force which may be applied in the transverse direction, seen in a three dimensional space, does not displace the secondary injection mould relative to the primary injection mould in the transverse direction. I.e. that the coupling between the moulds prevents the secondary injection mould to move relate to the primary injection mould.

The primary injection mould may support the secondary injection mould in at least a second direction the second direction may be in a longitudinal direction (axis) relative to the injection moulding cavity. This means that when the injected material expands inside the closed moulding cavity, the primary injection mould maintains the position of the secondary injection mould when the force of the expanding material pushes onto the secondary injection mould. Thus, the primary injection mould may ensure that the secondary injection mould does not move in a longitudinal direction as the primary injection mould supports the secondary injection mould in the longitudinal direction. By ensuring that the primary injection mould supports the secondary injection mould, the secondary injection mould may have a first rigidity that is less than a second rigidity of the primary injection mould, as the primary injection mould provides the support to the secondary injection mould. The coupling of the secondary injection mould to the primary injection mould ensures that the force which may be applied in the longitudinal direction, seen in a three dimensional space, does not displace the secondary injection mould relative to the primary injection mould in the longitudinal direction. I.e. that the coupling between the moulds prevents the secondary injection mould to move relate to the primary injection mould.

The primary injection mould may support the secondary injection mould in at least a third direction, the third direction may be in a vertical direction (axis) relative to the injection moulding cavity. This means that when the injected material expands inside the closed moulding cavity, the primary injection mould maintains the position of the secondary injection mould when the force of the expanding material pushes onto the secondary injection mould. Thus, the primary injection mould may ensure that the secondary injection mould does not move in a vertical direction as the primary injection mould supports the secondary injection mould in the vertical direction. By ensuring that the primary injection mould supports the secondary injection mould, the secondary injection mould may have a first rigidity that is less than a second rigidity of the primary injection mould, as the primary injection mould provides the support to the secondary injection mould. The coupling of the secondary injection mould to the primary injection mould ensures that the force which may be applied in the vertical direction, seen in a three dimensional space, does not displace the secondary injection mould relative to the primary injection mould in the vertical direction. I.e. that the coupling between the moulds prevents the secondary injection mould to move relate to the primary injection mould.

The primary injection mould may be adapted to support the secondary injection mould in more than one direction, where the support in a more than one direction can increase the stability of the secondary injection mould during its use. Thus, when footwear injection mould is closed, and the secondary injection mould creates the cavity of to be injection, the primary injection mould holds the secondary injection mould in its position, so that the secondary injection mould defines a rigid cavity for injection. When the material is injected into the cavity, the material expands inside the mould and creates a force on the secondary injection mould when the cavity has been filled. The coupling of the secondary injection mould to the primary injection mould ensures that the force which may be applied in a plurality of directions, seen in a three dimensional space, does not displace the secondary injection mould relative to the primary injection mould in more than one directions. I.e. that the coupling between the moulds prevents the secondary injection mould to move relate to the primary injection mould.

The injection moulding cavity may be seen as being defined in three dimensions, where the first dimension maybe seen as the longitudinal axis (longitudinal direction) of the injection moulding cavity extending from a heel area to a toe area of the mould. The second dimension may be seen as a transverse axis (transverse direction) that extends from a medial part of the footwear to the lateral part of the footwear. The third dimension may be seen as a vertical axis (vertical direction) extending from a ground contacting surface of the footwear in a direction towards the upper.

The coupling between the primary injection mould and the secondary injection mould may be a press coupling, mating coupling, snap coupling or any type of coupling that can stabilize and maintain the position of the secondary injection mould during injection moulding. This means that the secondary injection mould may be coupled to the primary injection mould where the coupling force between the secondary injection mould and the primary injection mould is enough to hold the primary injection mould in position during the injection moulding process, especially during the closing of the moulding cavity and/or during the curing of the injected material.

The footwear injection mould is configured to be utilized in an open position and a closed position. A footwear injection mould assembly in an embodiment not in accordance with the claimed invention may have a first side frame, a second side frame and a bottom frame. The first side frame, the second side frame and the bottom frame may be provided as mould assemblies comprising a primary injection mould part and a secondary injection mould part. The first side frame and the second side frame may be adapted to maneuver from an open position where the first side frame and the second side frames are separated from each other, and in a closed position where the first and second side frames are in contact with each other, where the mould cavity of the first side frame and the second side frame comprise at least part of a mould cavity, and preferably at least parts of the sides of the mould cavity. The first side frame and the second side frame may be adapted to move in a transverse (horizontal direction) relative to each other. The first side frame and the second side frame may define an upper lip, where the upper lip is adapted to contact an upper of an article of footwear, where the upper lip may close off the upper part of the mould cavity in its closed position, where the upper lip may have a continuous contact with the upper in its closed position, ensuring that the injected material is confined inside the mould cavity in a vertical direction upwards.

The bottom frame may define a bottom part of the mould cavity, where the bottom frame may e.g. define the lower part of a moulded shoe, such as the lower part of a midsole or a lower part of an outsole. The bottom frame may be adapted to be moveable from an open position to a closed position, where the movement may be in a vertical direction relative to the first and the second side frames. When the bottom frame is in its closed position, the bottom frame closes off the lower part of the moulding cavity and ensuring that the injected material is confined inside the mould cavity in a vertical direction downwards.

Thus, the first side frame, the second side frame and the bottom frame may in a closed position abut each other, defining the mould cavity. The first side frame, the second side frame and the bottom frame may have at least one contact surface, where the contact surface provides a contact surface between the first side frame and the second side frame or the bottom frame. The secondary injection mould may comprise the contact surface between a first side frame, a second side frame and/or a bottom frame.

According to the invention, the primary injection mould may comprise a first side frame, a second side frame and/or a bottom frame. The frames of the primary injection moulds may be adapted to be attached to the injection moulding manufacturing equipment, where the primary injection mould does not define an injection moulding cavity, but provides a coupling to a secondary injection mould.

In one embodiment the secondary injection mould may comprise a first side frame, a second side frame and/or a bottom frame. The frames of the secondary injection moulds are adapted to be coupled to the primary injection mould, where the primary injection mould defines the injection moulding cavity for the article of footwear.

The footwear injection mould comprises a primary injection mould having a first side frame, a second side frame and optionally a bottom frame, and a secondary injection mould having a first side frame, a second side frame and/or a bottom frame, where the first side frame of the primary injection mould is coupled to the first side frame of the secondary injection mould, the second side frame of the primary injection mould is coupled to the second side frame of the secondary injection mould, and/or the bottom frame of the primary injection mould may be coupled to the bottom frame of the secondary injection mould.

The first side frame, the second side frame and optionally the bottom frame of the primary injection mould are spaced from the first side frame, the second side frame and optionally the bottom frame of the primary injection mould, when the footwear injection mould is in its closed position. This means that the none of the primary injection moulds come into contact with other primary injection moulds, as the contact surface of the footwear injection mould is provided between the parts of the secondary injection mould.

In one embodiment the first coupling element may be configured to mate with the second coupling element. The first coupling element and the second coupling element may be parts having mutually complementing shapes. The first coupling element may be a female coupling element where the second coupling element may be female coupling element, where the male coupling element may be physically connected to the female coupling element. The first and the second coupling elements may be connected through friction, so that when the first coupling element is connected to the second coupling element, a friction between surface areas of the first coupling element and surface areas of the second coupling element maintains the position of the mated coupling elements. The first coupling element may be snap fit to the second coupling element, where one of the coupling elements may e.g. be elastically deformed to fit into the opposing coupling element, allowing an elastic force to hold the coupling elements in their position when mated.

The fixing of the primary injection mould to the secondary injection mould may be configured so that the primary injection mould is attached to the secondary injection mould, or vice versa up to a predefined limit, so that the operation of the footwear injection mould during manufacturing process ensures that the primary mould part and the secondary mould part are fixed to each other during the closing of the mould prior to injection moulding. Thus, the coupling force between the primary injection mould and the secondary injection mould may at least exceed the force applied through gravity, or may be more than 1.5 the force of gravity, or more preferably be more than 2 times the force of gravity. This, therefore means that the gravity or other external forces may have to exceed a certain limit before the coupling between the primary injection mould and the secondary injection mould releases. This may mean that a force may be required to separate the primary mould from the secondary mould.

The coupling force may also be large enough to withstand the opening of the footwear injection mould after the injection of the footwear part. In footwear injection moulding, a injection material is introduced into the footwear injection mould, where the injected material may be an expanding polymer, such as Polyurethane or a Thermoplastic Polyurethane, where the injected material expands and foams when the material cures. When the cured material has expanded, there may occur an adhesion or friction between the cured material and the injection mould. The coupling force between the primary injection mould and the secondary injection mould may exceed the adhesion or friction between the cured material and/or the injection mould, so that when the footwear injection mould opens during normal operation the footwear injection mould releases the injected footwear part, without separation between the primary injection mould and the secondary injection mould.

Thus, the primary injection mould may be fixed to the second injection mould with a coupling force that exceeds a predetermined level, where the predetermined level is higher than the force of gravity. Thus, when the mould is assembled, the force of gravity will not cause the separation of the first coupling element from the second coupling element.

The first and/or the second coupling element may extend along at least 10% of the length (along the longitudinal axis) of the primary injection mould and/or the secondary injection mould. This means that the primary injection mould and/or the secondary injection mould may be coupled to each other at different longitudinal positions along the length of the injection mould. The first and/or the second coupling elements may extend continuously from a first longitudinal position to a second longituidinal position of the primary injection mould and/or the secondary injection mould, where the dimension of the continuous coupling may be more than 10% of the length of the footwear injection mould. In one example the first coupling element may be a protrusion that extends along at least a part of the length of the footwear injection mould. The second coupling element may be a matching/mating groove which has a similar or the same length as the first coupling element, allowing the entire protrusion to be received.

The first coupling element and/or the second coupling element may be applied on a proximal end and/or a distal end of the primary and/or secondary injection mould, respectively and where the first coupling element and/or the second coupling element may optionally also be positioned on a transverse side of the primary and/or secondary injection mould, respectively. The first coupling element and/or the second coupling element may extend from a proximal end and continue continuously on a transverse side towards the distal end where the the first coupling element and/or the second coupling element terminates at the distal end. Thus, the coupling between the first coupling element and/or the second coupling element may extend continuously along the longitudinal length of the footwear injection mould.

In one embodiment the second coupling element may be positioned on a distal part of the secondary injection mould. The moulding cavity of the secondary injection mould may be positioned on a proximal part of the secondary injection mould, and the second coupling element may therefore be positioned distal to the moulding cavity.

In one embodiment the first coupling element may be positioned on a proximal part of the primary injection mould. This means that the secondary injection mould may be positioned on a proximal part of the primary injection mould, allowing the secondary injection mould to be positioned between the moulding cavity and the primary injection mould.

The first coupling element and the second coupling element may be positioned in an area between a moulding cavity and an attachment part of an injection moulding equipment. If a radial axis extends from the mould cavity and in a direction outwards, the distance along the radial axis from the first and/or the second coupling elements to the mould cavity will be shorter than the distance along the radial axis from the mould cavity to the attachment part. In one embodiment the primary injection mould may comprise a second coupling assembly, where the second coupling assembly is configured to attach the primary injection mould to an injection moulding apparatus. The second coupling assembly may be a standardized coupling assembly, where a first part of the coupling assembly may be a coupling assembly of an injection moulding apparatus, where the second part of the coupling assembly may be the opposing coupling part of the primary injection mould.

In one embodiment the footwear part may be a footwear sole. This means that the secondary injection mould may define a medial side, a lateral side, a forefoot side, a heel side and/or a bottom side of the sole. Thus, the secondary injection mould may define at least part of the outer surface of a sole for an article of a footwear.

The footwear injection mould is a footwear injection mould for direct injection moulding, where the footwear part is moulded directly to an upper of an article of footwear. This means that an upper may be utilized to define an upper boundary of the mould cavity, and the secondary injection mould may define one or more of the sides and the bottom of the injection mould cavity.

In one embodiment the secondary injection mould may be configured to seal at least partly against an upper of a shoe, when the footwear injection mould is in its closed state. This means that the secondary injection mould may be have a part that may be configured abut a surface area of an upper when the mould is closed, where the part of the secondary injection mould that abuts the upper defines at least one boundary of the moulding cavity. Thus, the boundary (to close off one of the chamber for moulding the footwear part.)

In one embodiment the secondary injection mould may comprise an upper part that may be configured seal the chamber. The upper part may e.g. be in the form of a footwear upper, where the footwear upper has been mounted on a last, and where the bottom part of the footwear upper, i.e. the insole and/or side parts of the upper define the upper part of a secondary injection mould. In one embodiment, the side parts of the secondary injection mould may seal against the upper part, i.e. seal against the insole and/or the side part of the footwear upper, to close off the mould cavity. Thus, when the injected material expands and cures, the injected material bonds to the insole and/or the side parts of the upper to create an article of footwear having a sole structure.

According to the invention, the secondary injection mould is additive manufactured.

This may e.g. mean that the secondary injection mould may be 3D printed, where layers of material are fused together in a layered structure to create a 3D shaped secondary injection mould. By providing the secondary injection mould as an additive manufactured part the primary injection mould may be utilized to provide support and rigidity to the secondary injection mould, and the secondary injection mould may be produced in such a manner so that the volume of the secondary injection mould is much smaller than traditional footwear injection moulds. By providing a two part footwear injection mould, the manufacturing time of the secondary mould may be reduced considerably, as a large part of the footwear mould is a generic part that can receive one or more secondary injection moulds, where the secondary injection moulds define the mould cavity of the footwear injection mould, while the primary mould may provide the structural stability of the mould.

Additive manufacturing is a time consuming manufacturing process, where a printing head adds a layer of polymeric material one layer at a time, where the positioning of the material is controlled by a computer or a controller, and where layers are stacked on top of each other. The manufacturing time may therefore be dependent on the material choice, the cure time and the speed of the 3D printer (additive manufacturing device). By providing the footwear injection mould in a primary injection mould and a secondary injection mould the size of the secondary mould may be reduced compared to traditional footwear moulds, where the reduction in size and/or volume results in a quicker production time and reduction in material used. Material that is used for 3D printing is often a relatively expensive material, where the price of the raw material may be relatively expensive. Thus, by reducing the size of the secondary injection mould it has been found that a complete set of secondary injection moulds for a particular series of footwear, which may be e.g. 8 sizes and moulds for the right foot and the left foot, may be provided at a much reduced time relative to a traditional footwear mould. Furthermore, the cost of a 3D printer is significantly less than the cost of the manufacturing equipment for traditional footwear injection moulds, which means that the tooling time for a 3D printed secondary injection mould is much less expensive than a traditional mould. CNC cutter. Thus, the present disclosure provides both a reduction in time as well as cost for the production of a footwear injection mould, as well as a turnover time when a new set of mould is to be provided for the manufacturing site.

The primary injection mould may comprise a body, where the body may be a metal body, where the body of the primary injection mould may be formed by cutting parts of the metal body into the necessary parts for the primary injection mould. I.e. the primary injection mould may e.g. be CNC (Computer Numerically Controlled) cut by a rotary cutter, a laser, or any suitable manufacturing technique that can form the outer surface of the metal body into the parts of the primary injection mould.

In one embodiment the primary injection mould may have a higher thermal conductivity than the secondary injection mould. During the injection manufacturing process, the injection moulding equipment heats up the footwear injection mould to a predetermined temperature, where the temperature of the mould may affect the curing process of the injected material, and a too low temperature may lead to flaws in the surface of the injected material. The primary injection mould may have a volume that is larger than the secondary injection mould, and where the secondary injection mould is connected to the primary injection mould during the manufacturing process, the primary injection mould may be used to transfer heat to the secondary injection mould. Thus, in order to improve the heat transfer from the primary injection mould to the secondary injection mould the primary mould may be adapted to transfer heat quickly from the manufacturing equipment to the secondary injection mould, as the secondary injection mould may be replaced during manufacturing meaning that the replaced secondary injection mould should be quickly heated to the required temperature. Thus, by having the primary injection mould having higher thermal conductivity than the secondary mould the turnover time may be reduced when replacing one secondary injection mould with another injection mould.

In one example the volumetric size of the secondary injection mould may be at least 20% less than the volumetric size of the primary injection mould. In a preferred embodiment the secondary injection mould may be at least 30% less than the volumetric size of the primary injection mould. In a more preferred embodiment the secondary injection mould may be at least 35% less than the volumetric size of the primary injection mould. In a more preferred embodiment the secondary injection mould may be at least 40% less than the volumetric size of the primary injection mould. In a more preferred embodiment the secondary injection mould may be at least 45% less than the volumetric size of the primary injection mould. In a more preferred embodiment the secondary injection mould may be at least 50% less than the volumetric size of the primary injection mould.

The volumetric size difference between the first injection mould and the second injection mould may mean that the time needed to warm up the secondary injection mould is reduced. When the secondary mould comprises less material, it may require less energy to heat up the secondary injection mould, while a larger volume requires a higher amount of energy to heat the secondary mould to a predetermined temperature, which may be optimal for injection moulding of footwear parts. The predetermined temperature may well known to the persons skilled in the art of injection moulding of footwear parts, and may furthermore be identified by trial and/error in addition to the known temperature range.

The thermal conductivity of the secondary mould may be more than 50% lower than the thermal conductivity of the primary mould, or the thermal conductivity of the secondary mould may be more than 60% lower than the thermal conductivity of the primary mould, or the thermal conductivity of the secondary mould may be more than 70% lower than the thermal conductivity of the primary mould, the thermal conductivity of the secondary mould may be more than 80% lower than the thermal conductivity of the primary mould, the thermal conductivity of the secondary mould may be more than 90% lower than the thermal conductivity of the primary mould.

In one embodiment the primary injection mould may have thermal conductivity of at least 10 W/M/°K, or more particularly may have a thermal conductivity of at least 20 W/M/°K, or more particularly may have a thermal conductivity of at least 30 W/M/°K, or more particularly may have a thermal conductivity of at least 50 W/M/°K. The primary injection mould may e.g. made of an aluminium alloy, where the alloy may e.g. be a mixture of one or more metals, where the thermal conductivity of the alloy may be in the range of 50 to more than 100 W/M/°K, where in one example the thermal conductivity may be above 200 W/M/°K.

In one embodiment the secondary injection mould may have thermal conductivity of no more than 50 W/M/°K, or more particularly may have a thermal conductivity of no more than 40 W/M/°K, or more particularly may have a thermal conductivity of no more than 30 W/M/°K, or more particularly may have a thermal conductivity of no more than 20 W/M/°K. In one example the thermal conductivity may be less than 10 W/M/°K, or even less than that.

The secondary injection mould may be manufactured from the same material as the primary injection mould, where the thermal conductivity of the two materials may be similar. This may e.g. be the case where the secondary injection mould may be made from a CNC cut material, such as aluminium. The thermal conductivity of the secondary mould may be within plus/minus 20% of the thermal conductivity of the primary mould.

The primary and secondary injection mould forms a side frame of a footwear injection mould, the primary injection mould has a primary lateral/transverse surface area and the secondary injection mould has a secondary lateral/transverse surface are which faces the primary injection mould. A contact surface between the primary injection mould and the secondary injection mould in a lateral direction is less than 70% of a lateral surface of the primary injection mould. In one embodiment, the coupling between the primary and the secondary injection mould is present on is less than 70% of the primary and/or secondary transverse surface of the primary injection mould and/or the secondary injection mould. In another embodiment the contact surface is less than 60% of the primary and/or secondary lateral/transverse surface of the primary injection mould and/or the secondary injection mould. In another alternative the contact surface is less than 50% of the primary and/or secondary lateral/transverse surface of the primary injection mould and/or the secondary injection mould. In another alternative the contact surface is less than 40% of the primary and/or secondary lateral/transverse surface of the primary injection mould and/or the secondary injection mould.

Thus, the contact surface between the primary injection mould and the secondary injection mould is less than 70% of the available surface. This may e.g. be advantageous as the primary injection mould has a higher temperature than the secondary injection mould, and the heat may deform or distort parts of the secondary mould. Thus, by reducing the contact area it may be possible to maintain the original shape of the secondary mould during injection moulding of the footwear part.

The bottom secondary injection mould may have an upper contact surface where the upper contact surface is configured to contact a lower contact surface of a side secondary injection mould. The upper contact surface and/or the lower contact surface may be arranged to a lateral side of the mould cavity when the mould is closed. Thus, the bottom secondary injection mould may be adapted to abut the bottom side of the side moulds, where the bottom mould does not enter the mould cavity defined by the side moulds, but does not travel beyond the lower contact surface and/or the lower peripheral end of the side secondary moulds. This may also mean that a lateral side of the bottom secondary mould may abut the primary side injection mould when the mould is closed. Thus, a lateral side part of the bottom secondary mould (bottom frame) is configured not to come into contact with the secondary injection mould first and/or second side frame.

Further, a footwear injection moulding system may comprise: at least one primary injection mould comprises a first coupling element of a first coupling assembly; two or more secondary injection moulds providing at least part of an injection chamber for moulding a footwear part, where the injection chamber comprises a proximal surface defining at least part of a distal surface of the footwear part and a second coupling element of the first coupling assembly; where the first coupling assembly is configured to fix the secondary injection mould relative to the first injection mould.

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

### BRIEF DESCRIPTION OF THE DRAWINGS

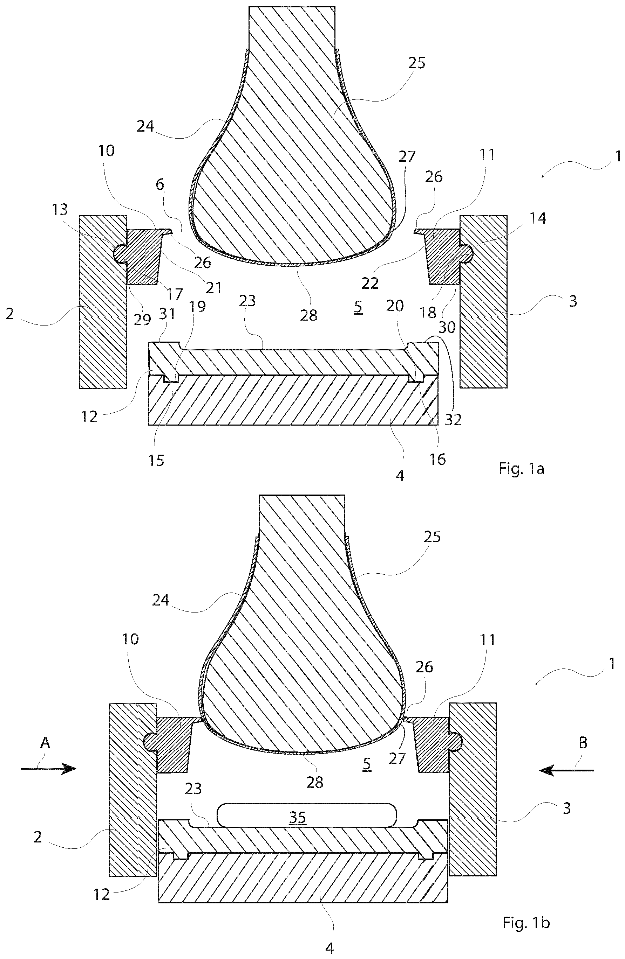

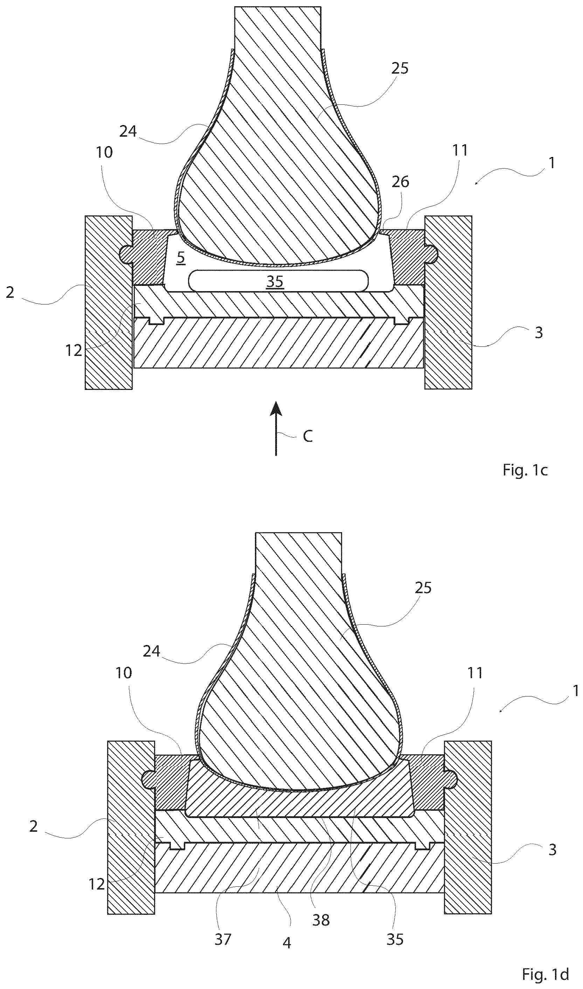

The following is an explanation of exemplary embodiments with reference to the drawings, in which
Fig. 1 a-d show sectional schematic diagram of a footwear injection mould from its open position to their closed position.

### DETAILED DESCRIPTION

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

Fig. 1a shows a cross-sectional view of a footwear injection mould 1 in accordance with the present disclosure, where the cross sectional plane is a horizontal plane that may be seen as being perpendicular to the longitudinal axis of the footwear injection mould. The footwear injection mould comprises a first primary side mould 2, a second primary side mould 3 and a first primary bottom mould 4. The footwear injection mould 1 in Fig. 1a is in an open state, where the first primary side mould 2, the second primary side mould 3 and the first primary bottom mould 4 are spaced from each other, allowing access to the mould cavity 5 from one or more positions, such as from the upper opening 6. The first primary side mould 2, the second primary side mould 3 and the first primary bottom mould 4 are provided with attachment parts (not shown) that allow the primary injection moulds 2, 3, 4 to be attached to an injection moulding equipment (not shown), and where the attachment to the injection moulding equipment may be adapted to transfer heat from the injection moulding equipment to the primary injection moulds 2, 3, 4 so that the footwear injection mould can be warmed up to a predefined temperature to optimize the injection moulding of the footwear part in the mould cavity 5.

The first primary side mould 2, the second primary side mould 3 and the first primary bottom mould 4 may be provided with a first secondary side mould 10, a second secondary side mould 11 and a first secondary bottom mould 12, respectively, where the secondary injection moulds 10, 11, 12 may be coupled to the primary injection moulds 2, 3, 4. The primary injection moulds 2, 3, 4 may be provided with first coupling elements 13, 14, 15, 16 that are adapted to mate with second coupling elements 17, 18, 19, 20 that allow the secondary injection moulds 10, 11, 12 to be coupled to the primary injection moulds 2, 3, 4. The coupling elements may be adapted to hold the secondary injection moulds 10, 11, 12 relative to the primary injection moulds 2, 3, 4 during the injection moulding process, ensuring that the secondary injection moulds 10, 11, 12 are held in position while the footwear injection mould 1 is moved from its open position, as shown in Fig. 1a towards its closed position, shown in Fig. 1c and during the injection moulding process, as shown in Fig. 1d.

The secondary injection moulds 10, 11, 12 may be adapted to provide a mould cavity 5, by providing a first side inner surface 21, a second side inner surface 22 and a third bottom inner surface 23 providing an outer surface of the element to be moulded inside the mould cavity 5. The upper part of the mould cavity 5 may be delimited by a footwear upper 24, which may be mounted on a last 25, where the last fixes the upper 24 relative to the mould cavity 5. Furthermore, the first secondary side mould 10 and the second secondary side mould 11 are provided with a lip 26, where the lip has a form and shape that is adapted to follow an outer surface 27 of the upper 24. When the lip 25 is pushed into contact with the outer surface 27 of the upper 24, as e.g. seen in Fig. 1b the lip may close off the mould cavity in conjunction with the bottom part 28 of the upper 24, and assist in preventing that injection moulding material which is introduced into the mould cavity 5 does not exit the cavity 5 via the upper opening 6 of the cavity 5.

The first secondary injection side mould 10 and the second secondary injection side mould 11 may be provided with a first 29 and a second contact surface 30 positioned on a bottom part of the first secondary injection side mould 10 and the second secondary injection side mould 11, respectively, which may be adapted to abut a first 31 and a second 32 upper contact surface of the secondary bottom mould 12. The contact surfaces may be adapted to close off the mould cavity 5 between the secondary side moulds 10, 11 and the secondary bottom mould 12, as seen in e.g. Fig. 1c. The contact surface may extend from a front end (toe end) of the secondary injection moulds 10, 11,12 towards its back end (heel end). Furthermore, the first side injection mould 10 and the second side injection mould 11 may have third and/or a fourth contact surface (not shown) between the moulds, where the contact surfaces may be positioned in an area where the first and second secondary injection moulds divide the sides of the mould cavity between them.

Fig. 1a shows that the last 25 has been introduced into the moulding cavity, allowing the bottom part of the upper 34 to be exposed to the upper part of the mould cavity 5. The last 25 may be moveable in a vertical direction in and out of the mould cavity 5, so that when the footwear part has been moulded to the upper, the last 25, the upper 26 and the footwear part may be maneuvered away from the mould cavity for removal, and the next last and upper may be introduced into the mould cavity.Fig. 1b shows an intermediate state of the footwear injection mould, where the primary side moulds 2, 3 and the secondary side moulds 10, 11 have been maneuvered inwards in the directions A, B towards the upper 24, where the lip 26 is moved into contact with the upper 24, and the secondary side moulds 10, 11 come into contact with each other at their toe and heel end (not shown) to close off the upper part of the mould cavity 5. The lip 26 and the contact surfaces are forced into contact so that the flow of the injection material can pass out of the mould cavity via the contact surfaces and the lip 26.

Prior to this movement, the injection material 35, may be introduced into the mould cavity, e.g. by introducing it to the upper surface 23 of the secondary bottom mould 12 prior to the closing of the footwear injection mould 1, where the mould 1 may be closed allowing the injected material to expand to fill the mould cavity 5 and to bond to the lower part 28 of the upper 26.

Fig 1c shows where the primary bottom injection mould 4 and the secondary bottom injection mould 12 have been moved upwards in a vertical direction C, where the secondary bottom injection mould 12 abuts the first 10 and the second side moulds 11, and closing the mould cavity 5. When the footwear injection mould 1 is closed, the mould cavity 5 is closed to the surrounding environment, ensuring that the injected material takes the shape of the mould cavity 5.

Fig. 1d shows where the injected material 35 has expanded to fill out the entire volume of the mould cavity 5, where the injected material 35 comes into contact with the inner surfaces of the secondary injection mould, causing the outer surface 38 of the injected material 35 to take the shape of the mould cavity and the inner surfaces of the secondary injection mould, to form a footwear sole 37.

When the injected material 35 has cured, the primary side injection moulds 2, 2, may be moved in a horizontal movement opposite to the direction A, B shown in Fig. 1b, and the primary bottom injection mould 4 to be moved in the opposite direction C shown in fig. 1c, and thereby opening the footwear injection mould. The movement of the primary injection moulds 2, 3, 4 allows the secondary injection moulds 10, 11, 12 to be removed from the injected material 35 and the last 25, the upper 26 and the sole 37 may be removed from the mould 1.

If the injection moulding equipment is supposed to be utilized for a different type of shoe or a different size of shoe, the secondary injection moulds may be de coupled from the primary injection moulds, and replaced with another set of secondary injection moulds, that define an alternative mould cavity, as well as exchanging the last and the upper to close off the upper part of the mould cavity, where the additional set of secondary injection moulds may be coupled to the primary injection moulds. Thus, the primary injection mould parts may be utilized for a plurality (more than one) secondary injection moulds, and the injection moulding equipment may be quickly made ready for the injection of a different type of article of footwear.

It should further be noted that any reference signs do not limit the scope of the claims, that the exemplary embodiments may be implemented at least in part by means of both hardware and software, and that several "means", "units" or "devices" may be represented by the same item of hardware.

Although features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense.

## Claims

1. A footwear injection mould, the footwear injection mould being a direct injection mould and comprising:
- a primary injection mould comprises a first coupling element (13, 14, 15, 16) of a first coupling assembly;
- a secondary injection mould providing at least part of an injection chamber for moulding a footwear part, where the injection chamber comprises a proximal surface defining at least part of a distal surface of the footwear part and a second coupling element (17, 18, 19, 20) of the first coupling assembly;
- where the first coupling assembly is configured to fix the secondary injection mould relative to the first injection mould,
- wherein the secondary injection mould is additive manufactured, and
- wherein the primary injection mould comprises a first side frame, a second side frame and optionally a bottom frame wherein a contact surface between the primary injection mould and the secondary injection mould in a lateral direction is less than 70% of a lateral surface of the primary injection mould, and wherein the first side frame is spaced from the second side frame when the footwear injection mould is in its closed position.

2. A footwear injection mould in accordance with claim 1, wherein the secondary injection mould comprises a first side frame, a second side frame and/or a bottom frame.

3. A footwear injection mould in accordance with any of the preceding claims, wherein the first coupling element (13, 14, 15, 16) is configured to mate with the second coupling element (17, 18, 19, 20).

4. A footwear injection mould in accordance with any of the preceding claims, wherein the second coupling element (17, 18, 19, 20) is positioned on a distal part of the secondary injection mould.

5. A footwear injection mould in accordance with any of the preceding claims, wherein the first coupling element (13, 14, 15, 16) is positioned on a proximal part of the primary injection mould.

6. A footwear injection mould in accordance with any of the preceding claims, wherein the secondary injection mould comprises a second injection channel.

7. A footwear injection mould in accordance with any of the preceding claims, wherein the primary injection mould comprises a second coupling assembly, where the second coupling assembly is configured to attach the primary injection mould to an injection moulding apparatus.

8. A footwear injection mould in accordance with any of the preceding claims, wherein the footwear part is a shoe sole (37).

9. A footwear injection mould in accordance with any of the preceding claims, wherein the secondary injection mould is configured to seal at least partly against an upper (24) of a shoe, when the footwear injection mould is in its closed state. (to close off one of the chamber for moulding the footwear part.)

10. A footwear injection mould in accordance with any of the preceding claims, wherein the secondary injection mould comprises an upper part that is configured to seal the chamber.

11. A footwear injection mould in accordance with any of the preceding claims, wherein the primary injection mould has a higher thermal conductivity than the secondary injection mould.

12. A footwear injection mould in accordance with any of the preceding claims, wherein the primary injection mould has a thermal conductivity of at least 10 W/M/°K, or more particularly has a thermal conductivity of at least 20 W/M/°K, or more particularly has a thermal conductivity of at least 30 W/M/°K, or more particularly has a thermal conductivity of at least 50 W/M/°K.

13. A footwear injection mould in accordance with any of the preceding claims, wherein the secondary injection mould has a thermal conductivity of no more than 50 W/M/°K, or more particularly has a thermal conductivity of no more than 40 W/M/°K, or more particularly has a thermal conductivity of no more than 30 W/M/°K, or more particularly has a thermal conductivity of no more than 20 W/M/°K.

## Patentansprüche

1. Fußbekleidungsspritzgussform, wobei die Fußbekleidungsspritzgussform eine Direktspritzgussform ist und umfasst:
- eine primäre Spritzgussform, die ein erstes Kupplungselement (13, 14, 15, 16) einer ersten Kupplungsanordnung umfasst;
- eine sekundäre Spritzgussform, die mindestens einen Teil einer Spritzgusskammer für eine Formung eines Fußbekleidungsteils bereitstellt, wobei die Spritzgusskammer eine proximale Oberfläche, die mindestens einen Teil einer distalen Oberfläche des Fußbekleidungsteils definiert, und ein zweites Kopplungselement (17, 18, 19, 20) der ersten Kopplungsanordnung umfasst;
- wobei die erste Kupplungsanordnung konfiguriert ist, um die sekundäre Spritzgussform relativ zu der ersten Spritzgussform zu befestigen,
- wobei die sekundäre Spritzgussform additiv gefertigt ist und
- wobei die primäre Spritzgussform einen ersten Seitenrahmen, einen zweiten Seitenrahmen und optional einen unteren Rahmen umfasst, wobei eine Kontaktoberfläche zwischen der primären Spritzgussform und der sekundären Spritzgussform in einer seitlichen Richtung weniger als 70 % einer lateralen Oberfläche der primären Spritzgussform beträgt und wobei der erste Seitenrahmen von dem zweiten Seitenrahmen beabstandet ist, wenn sich die Fußbekleidungsspritzgussform in ihrer geschlossenen Position befindet.

2. Fußbekleidungsspritzgussform nach Anspruch 1, wobei die sekundäre Spritzgussform einen ersten Seitenrahmen, einen zweiten Seitenrahmen und/oder einen unteren Rahmen umfasst.

3. Fußbekleidungsspritzgussform nach einem der vorstehenden Ansprüche, wobei das erste Kopplungselement (13, 14, 15, 16) konfiguriert ist, um mit dem zweiten Kopplungselement (17, 18, 19, 20) zusammenzupassen.

4. Fußbekleidungsspritzgussform nach einem der vorstehenden Ansprüche, wobei das zweite Kopplungselement (17, 18, 19, 20) an einem distalen Teil der sekundären Spritzgussform positioniert ist.

5. Fußbekleidungsspritzgussform nach einem der vorstehenden Ansprüche, wobei das erste Kopplungselement (13, 14, 15, 16) an einem proximalen Teil der primären Spritzgussform positioniert ist.

6. Fußbekleidungsspritzgussform nach einem der vorstehenden Ansprüche, wobei die sekundäre Spritzgussform einen zweiten Spritzgusskanal umfasst.

7. Fußbekleidungsspritzgussform nach einem der vorstehenden Ansprüche, wobei die primäre Spritzgussform eine zweite Kupplungsanordnung umfasst, wobei die zweite Kupplungsanordnung konfiguriert ist, um die primäre Spritzgussform an einer Spritzgussformungseinrichtung anzubringen.

8. Fußbekleidungsspritzgussform nach einem der vorstehenden Ansprüche, wobei das Fußbekleidungsteil eine Schuhsohle (37) ist.

9. Fußbekleidungsspritzgussform nach einem der vorstehenden Ansprüche, wobei die sekundäre Spritzgussform konfiguriert ist, um mindestens teilweise gegen ein Obermaterial (24) eines Schuhs abzudichten, wenn sich die Fußbekleidungsspritzgussform in ihrem geschlossenen Zustand befindet (um eine der Kammern für die Formung des Fußbekleidungsteils verschließen).

10. Fußbekleidungsspritzgussform nach einem der vorstehenden Ansprüche, wobei die sekundäre Spritzgussform einen oberen Teil umfasst, der konfiguriert ist, um die Kammer abzudichten.

11. Fußbekleidungsspritzgussform nach einem der vorstehenden Ansprüche, wobei die primäre Spritzgussform eine höhere Wärmeleitfähigkeit als die sekundäre Spritzgussform aufweist.

12. Fußbekleidungsspritzgussform nach einem der vorstehenden Ansprüche, wobei die primäre Spritzgussform eine Wärmeleitfähigkeit von mindestens 10 W/M/°K aufweist oder insbesondere eine Wärmeleitfähigkeit von mindestens 20 W/M/°K aufweist oder insbesondere eine Wärmeleitfähigkeit von mindestens 30 W/M/°K aufweist oder insbesondere eine Wärmeleitfähigkeit von mindestens 50 W/M/°K aufweist.

13. Fußbekleidungsspritzgussform nach einem der vorstehenden Ansprüche, wobei die sekundäre Spritzgussform eine Wärmeleitfähigkeit von nicht mehr als 50 W/M/°K aufweist oder insbesondere eine Wärmeleitfähigkeit von nicht mehr als 40 W/M/°K aufweist oder insbesondere eine Wärmeleitfähigkeit von nicht mehr als 30 W/M/°K aufweist oder insbesondere eine Wärmeleitfähigkeit von nicht mehr als 20 W/M/°K aufweist.

## Revendications

1. Moule d'injection pour chaussures, le moule d'injection pour chaussures étant un moule d'injection directe et comprenant :
- un moule d'injection primaire comprenant un premier élément d'accouplement (13, 14, 15, 16) d'un premier ensemble d'accouplement ;
- un moule d'injection secondaire fournissant au moins une partie d'une chambre d'injection pour mouler une partie de chaussure, où la chambre d'injection comprend une surface proximale définissant au moins une partie d'une surface distale de la partie de chaussure et un deuxième élément d'accouplement (17, 18, 19, 20) du premier ensemble d'accouplement ;
- le premier ensemble de couplage étant configuré pour fixer le moule d'injection secondaire par rapport au premier moule d'injection,
- dans lequel le moule d'injection secondaire est fabriqué par ajout de matière, et
- dans lequel le moule d'injection primaire comprend un premier cadre latéral, un deuxième cadre latéral et éventuellement un cadre inférieur, dans lequel une surface de contact entre le moule d'injection primaire et le moule d'injection secondaire dans une direction latérale est inférieure à 70 % d'une surface latérale du moule d'injection primaire, et dans lequel le premier cadre latéral est espacé du deuxième cadre latéral lorsque le moule d'injection pour chaussures est dans sa position fermée.

2. Moule à injection pour chaussures selon la revendication 1, dans lequel le moule à injection secondaire comprend un premier cadre latéral, un deuxième cadre latéral et/ou un cadre inférieur.

3. Moule à injection pour chaussures selon l'une quelconque des revendications précédentes, dans lequel le premier élément d'accouplement (13, 14, 15, 16) est configuré pour s'accoupler avec le deuxième élément d'accouplement (17, 18, 19, 20).

4. Moule à injection pour chaussures selon l'une des revendications précédentes, dans lequel le deuxième élément d'accouplement (17, 18, 19, 20) est positionné sur une partie distale du moule à injection secondaire.

5. Moule à injection pour chaussures selon l'une des revendications précédentes, dans lequel le premier élément d'accouplement (13, 14, 15, 16) est positionné sur une partie proximale du moule à injection primaire.

6. Moule à injection pour chaussures selon l'une quelconque des revendications précédentes, dans lequel le moule d'injection secondaire comprend un deuxième canal d'injection.

7. Moule à injection pour chaussures selon l'une des revendications précédentes, dans lequel le moule à injection primaire comprend un deuxième ensemble de couplage, dans lequel le deuxième ensemble d'accouplement étant configuré pour fixer le moule à injection primaire à un appareil de moulage par injection.

8. Moule à injection pour chaussures selon l'une quelconque des revendications précédentes, dans lequel la partie de chaussure est une semelle de chaussure (37).

9. Moule à injection pour chaussures selon l'une quelconque des revendications précédentes, dans lequel le moule à injection secondaire est configuré pour assurer au moins partiellement l'étanchéité contre une tige (24) d'une chaussure, lorsque le moule à injection pour chaussures est dans son état fermé, (pour fermer l'une des chambres pour le mouler la pièce de chaussure.)

10. Moule à injection pour chaussures selon l'une quelconque des revendications précédentes, dans lequel le moule à injection secondaire comprend une partie supérieure configurée pour sceller la chambre.

11. Moule à injection pour chaussures selon l'une des revendications précédentes, dans lequel le moule d'injection primaire à une conductivité thermique plus élevée que le moule d'injection secondaire.

12. Moule à injection pour chaussures selon l'une quelconque des revendications précédentes, dans lequel le moule d'injection primaire présente une conductivité thermique d'au moins 10 W/M/°K, ou plus particulièrement une conductivité thermique d'au moins 20 W/M/°K, ou plus particulièrement une conductivité thermique d'au moins 30 W/M/°K, ou plus particulièrement une conductivité thermique d'au moins 50 W/M/°K.

13. Moule à injection pour chaussures selon l'une quelconque des revendications précédentes, dans lequel le moule injection secondaire présente une conductivité thermique inférieure ou égale à 50 W/M/°K, ou plus particulièrement inférieure ou égale à 40 W/M/°K, ou plus particulièrement inférieure ou égale à 30 W/M/°K, ou plus particulièrement inférieure ou égale à 20 W/M/°K.
